# EUROPÄISCHE PATENTANMELDUNG

(11) **EP 4 002 659 A1**
(43) Veröffentlichungstag der Anmeldung: **25.05.2022**
(21) Anmeldenummer: 21207497.5
(22) Anmeldetag: 10.11.2021
(51) Int. Cl.: H02K 15/12, H02K 15/14, H02K 5/04

(54) **ELEKTRISCHE MASCHINE, VERFAHREN ZUR HERSTELLUNG EINER STATOR-/GEHÄUSEANORDNUNG FÜR EINE ELEKTRISCHE MASCHINE UND FAHRZEUG**

(30) Priorität: 11.11.2020 DE 102020214149
(71) Anmelder: Valeo Siemens eAutomotive Germany GmbH, 91056 Erlangen (DE)
(72) Erfinder: Werner, Robert, 97616 Bad Neustadt a.d.Saale (DE); Kessler, Bernhard, 97616 Bad Neustadt a.d.Saale (DE)

(57) **Zusammenfassung**

Es wird ein Verfahren zur Herstellung einer Stator-/Gehäuseanordnung für eine elektrische Maschine (1) mit einem Stator (5) und einem Gehäuse (2) angegeben, wobei ein Gehäuseteil (3, 3a..3c) des Gehäuses (2) zumindest eine umfangsseitige Gehäusenut (4, 4a..4c) aufweist und ein Statorblechpaket (6, 6a..6c) des Stators (5) zumindest eine umfangsseitige Statornut (9, 9a..9c) aufweist. Das Einlegen oder Einpressen des Statorblechpakets (6, 6a..6c) in das Gehäuseteil (3, 3a..3c) erfolgt dabei in einer Position, in der die Statornut (9, 9a..9c) und die Gehäusenut (4, 4a..4c) einen Schnittbereich (B) aufweisen. In Folge wird eine Vergußmasse (15) in die Statornut (9, 9a..9c) und die Gehäusenut (4, 4a..4c) eingebracht. Weiterhin wird eine elektrische Maschine (1) mit einer Stator-/Gehäuseanordnung mit den oben angegebenen Eigenschaften angegeben, sowie ein Fahrzeug (19) mit einer solchen elektrischen Maschine (1).

## Beschreibung

### TECHNISCHES GEBIET

Die Erfindung betrifft eine elektrische Maschine, ein Verfahren zur Herstellung einer Stator-/Gehäuseanordnung für eine elektrische Maschine sowie ein Fahrzeug mit einer solchen elektrischen Maschine.

### STAND DER TECHNIK

Bei elektrischen Maschinen ist es bekannt, das Statorblechpaket in ein Gehäuseteil des Gehäuses einzupressen. Dabei entsteht insbesondere bei einem großen Bereich im Hinblick auf die Einsatz- oder Betriebstemperatur der elektrischen Maschine das Problem, dass sich eine Passung zwischen den genannten Teilen verändert, wenn diese nicht aus dem gleichen Material hergestellt sind. Dies ist etwa dann der Fall, wenn die Statorbleche des Statorblechpakets aus Stahl, das Gehäuseteil jedoch aus einer Aluminiumlegierung bestehen. Da sich Aluminium stärker ausdehnt als Stahl, wird die Presspassung bei Erwärmung der elektrischen Maschine schwächer, bei Abkühlung stärker. Insofern besteht bei Erwärmung das Problem, dass das Statorblechpaket durchrutscht, es also zu einer unerwünschten Relativdrehung zwischen dem Statorblechpaket und dem Gehäuseteil kommt. Bei Abkühlung besteht wiederum das Problem, dass das Statorblechpaket unter Umständen so stark auf das Gehäuseteil drückt, dass dieses bricht. Die Wandstärke des Gehäuseteils muss daher so gewählt werden, dass dies nicht passiert, wodurch das Gewicht der elektrischen Maschine erhöht wird. Insbesondere wenn diese in einem Fahrzeug eingesetzt wird, ist dies ein sehr nachteiliger Effekt. Nachteilig ist generell auch, dass sowohl die Innenseite des Gehäuseteils als auch die Außenseite des Statorblechpakets mit sehr geringen Toleranzen hergestellt werden müssen, sodass die Presspassung zwischen dem Statorblechpaket und dem Gehäuseteil reproduzierbare Eigenschaften aufweist. Denkbar ist im gegebenen Zusammenhang auch, geeignete Paare aus einer Vielzahl von Statorblechpaketen und Gehäuseteilen durch Messen des Innendurchmessers des Gehäuseteils und des Außendurchmessers des Statorblechpakets auszusuchen, was ebenfalls sehr aufwändig ist.

Bekannt ist auch, das Statorblechpaket mit dem Gehäuse zu verschrauben oder ein Formschlusselement zwischen dem Statorblechpaket und dem Gehäuse anzuordnen, zum Beispiel eine Passfeder. Auch hier ist das Herstellen der Verbindung zwischen dem Statorblechpaket und dem Gehäuse sehr aufwändig und das Vorsehen einer Passung notwendig, wenngleich an diese geringere Anforderungen gestellt werden können. Für das Einsetzen eines Formschlusselements zwischen dem Statorblechpaket und dem Gehäuse ist es auch erforderlich, dass das Statorblechpaket und das Gehäuse korrekt zueinander ausgerichtet, also nicht gegeneinander verdreht sind. Dies stellt hohe Anforderungen an den Herstellungsprozess, da das Statorblechpaket auf der einen Seite in das Gehäuseteil des Gehäuses eingepresst werden muss, andererseits aber auch eine korrekte Winkellage zwischen dem Statorblechpaket und dem Gehäuse eingehalten werden muss.

### OFFENBARUNG DER ERFINDUNG

Eine Aufgabe der Erfindung ist es daher, eine verbesserte elektrische Maschine, ein verbessertes Verfahren zur Herstellung einer Stator-/Gehäuseanordnung für eine elektrische Maschine sowie ein verbessertes Fahrzeug mit einer solchen elektrischen Maschine anzugeben. Insbesondere sollen die oben genannten Nachteile überwunden werden. Im Speziellen soll die Herstellung der elektrischen Maschine vereinfacht werden, gleichzeitig aber eine Verdrehung zwischen dem Statorblechpaket und dem Gehäuse im Betrieb der elektrischen Maschine vermieden werden.

Die Aufgabe der Erfindung wird mit einem Verfahren zur Herstellung einer Stator-/Gehäuseanordnung für eine elektrische Maschine mit einem Stator und einem Gehäuse gelöst, das die folgenden Schritt aufweist:
- Bereitstellen eines Gehäuseteils des Gehäuses, das zumindest eine umfangsseitige, radial nach innen offene Gehäusenut aufweist,
- Bereitstellen eines Statorblechpakets des Stators, das zumindest eine umfangsseitige, radial nach außen offene Statornut aufweist,
- Einlegen oder Einpressen des Statorblechpakets in das Gehäuseteil in einer Position, in der die Statornut und die Gehauene einen Schnittbereich beziehungsweise Überlappungsbereich aufweisen und
- Einbringen einer Vergußmasse in einen durch die Statornut und die Gehäusenut gebildeten Hohlraum, insbesondere mit Hilfe einer rohrförmigen Lanze.

Weiterhin wird die Aufgabe der Erfindung durch eine elektrische Maschine gelöst, welche
- ein Gehäuse mit einem Gehäuseteil umfasst, das zumindest eine umfangsseitige, radial nach innen offene Gehäusenut aufweist,
- einen in dem Gehäuseteil angeordneten Stator mit einem Statorblechpaket, wobei das Statorblechpaket zumindest eine umfangsseitige, radial nach außen offene Statornut aufweist und
- einen im Gehäuse angeordneten und darin drehbar gelagerten Rotor.

Schließlich wird die Aufgabe auch durch ein Fahrzeug mit wenigstens zwei Achsen gelöst, von denen wenigstens eine angetrieben ist, wobei der besagte Antrieb zumindest teilweise oder zeitweise durch die oben genannte elektrische Maschine erfolgt.

Mit Hilfe der vorgeschlagenen Maßnahmen können die eingangs erwähnten Nachteile überwunden werden. Erzielt wird dies durch eine Vergußmasse, die in flüssiger oder pastöser Form in das durch die Statornut und die Gehäusenut gebildete Volumen eingebracht wird und dort in Folge aushärtet. Dadurch muss eine bestimmte Winkellage zwischen dem Statorblechpaket und dem Gehäuseteil bei der Herstellung der elektrischen Maschine nicht besonders genau eingehalten werden, da die Vergußmasse in flüssiger oder pastöser Form auch bei nicht genauer Winkellage zwischen dem Statorblechpaket und dem Gehäuseteil gut eingebracht werden kann und sich an den durch die Statornut und die Gehäusenut gegebenen Hohlraum gut anpassen kann. Andererseits muss auch eine Passung zwischen dem Statorblechpaket und dem Gehäuseteil nicht besonders eng gewählt werden, um eine Verdrehung zwischen denselben zu verhindern, da die Vergußmasse in ausgehärteter Form einen Formschluss zwischen dem Statorblechpaket und dem Gehäuseteil bewirkt und eine Verdrehung zwischen denselben im Betrieb der elektrischen Maschine wirksam verhindert, auch wenn eine Presspassung zwischen dem Statorblechpaket und dem Gehäuseteil lose werden sollte. Das Gehäuseteil kann dadurch relativ dünnwandig gestaltet werden, was sich positiv auf das Gewicht der elektrischen Maschine auswirkt und insbesondere den Einsatz derselben in einem Fahrzeug begünstigt.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist die Statornut auf einem Ende des Statorblechpakets verschlossen und/oder ist die Gehäusenut auf einem Ende des Gehäuseteils verschlossen. Auf diese Weise kann ein Ausfließen der Vergußmasse beim Einbringen in die Gehäusenut und die Statornut verhindert werden, selbst bei hohen entstehenden Drücken.

Vorteilhaft umfasst das Statorblechpaket mehrere aufeinander gestapelte Statorbleche, die jeweils eine umfangsseitige, radial nach außen offene Ausnehmung aufweisen, die gemeinsam die Statornut bilden, wobei die Statornut
a) in axialer Richtung verläuft oder
b) schraubenlinienförmig verläuft.

Bei dieser Ausführungsform wird bei der Herstellung der einzelnen Statorbleche eine Ausnehmung vorgesehen, die beispielsweise durch Stanzen oder Laserschneiden angefertigt werden kann. Beim Stapeln der Statorbleche ergeben die Ausnehmungen der Statorbleche in Summe die Statornut im Statorblechpaket. Je nachdem ob die Statorbleche deckungsgleich aufeinander gestapelt werden oder gegeneinander verdreht werden, ergibt sich ein unterschiedlicher Verlauf der Statornut. Werden die Statorbleche deckungsgleich aufeinander gestapelt, ergibt sich eine Statornut, die in axialer Richtung verläuft (Fall a). Werden die Statorbleche beim Stapeln gegeneinander verdreht, so ergibt sich ein schraubenlinienförmiger Verlauf der Statornut (Fall b). In beiden Fällen kann eine spanende Bearbeitung des Statorblechpakets zur Herstellung der Statornut entfallen. Ausgeschlossen ist diese aber nicht. Die Statornut kann prinzipiell auch nach dem Stapeln der Statorbleche hergestellt werden, beispielsweise durch Fräsen.

Günstig ist es weiterhin, wenn die Statorbleche identisch geformt sind, wobei der Abschluss der Statornut durch Verdrehung der Statorbleche im Endbereich der Statornut gegenüber den Statorblechen im Nutbereich der Statornut bewerkstelligt ist. Dadurch kann die Statornut auf einem Ende des Statorblechpakets auf einfache Weise verschlossen werden, ohne die Herstellung der einzelnen Statorbleche zu verkomplizieren.

Vorteilhaft ist es auch, wenn die Gehäusenut in axialer Richtung verläuft. Auf diese Weise kann die Gehäusenut problemlos beim Gießen des Gehäuses hergestellt werden. Eine spanende Bearbeitung des Gehäuses zur Herstellung der Gehäusenut kann dann entfallen.

Vorteilhaft besteht die Vergußmasse aus einem Kunststoff oder einem Kunststoff-Verbundwerkstoff. Die Eigenschaften von Kunststoffen oder Kunststoff-Verbundwerkstoffen können über einen weiten Parameterbereich eingestellt und somit gut an die vorliegende Aufgabe angepasst werden. Eine gut angepasste Vergußmasse kann daher einerseits gut in den durch die Gehäusenut und in die Statornut gebildeten Hohlraum eingebracht werden, erfüllt im ausgehärteten Zustand aber auch die Anforderungen an Stabilität, insbesondere bei starken Temperaturschwankungen und mechanischer Wechselbelastung.

Günstig ist es schließlich, wenn zwischen dem Statorblechpaket und dem Gehäuseteil eine Presspassung vorgesehen ist. Auf diese Weise kann ein Drehmoment zwischen dem Statorblechpaket und dem Gehäuseteil zumindest zum Teil oder zumindest über einen weiten Temperaturbereich kraftschlüssig übertragen werden. Die Vergußmasse wirkt dann als zusätzliche Sicherung.

An dieser Stelle wird angemerkt, dass sich die zur elektrischen Maschine genannten Ausführungsvarianten und die daraus resultierenden Vorteile gleichermaßen auf das Verfahren zur Herstellung einer Stator-/Gehäuseanordnung für eine elektrische Maschine beziehen.

Die obigen Ausgestaltungen und Weiterbildungen der Erfindung lassen sich auf beliebige Art und Weise kombinieren.

### KURZE BESCHREIBUNG DER FIGUREN

Ausführungsbeispiele der Erfindung sind exemplarisch in den beigefügten schematischen Figuren dargestellt. Es zeigen:
- Fig. 1: eine schematisch im Halbschnitt dargestellte, beispielhafte elektrische Maschine mit einer Vergußmasse in der Gehäusenut und in der Statornut;
- Fig. 2: ein Beispiel für eine Stator-/Gehäuseanordnung mit einer Verdrehsicherung mit ellipsenförmigem Querschnitt in Vorderansicht;
- Fig. 3: ein Beispiel für eine Stator-/Gehäuseanordnung mit einer Verdrehsicherung mit rechteckförmigem Querschnitt in Vorderansicht;
- Fig. 4: ein Beispiel für eine Stator-/Gehäuseanordnung mit einer Verdrehsicherung mit kreisförmigem Querschnitt in Vorderansicht;
- Fig. 5: ein Beispiel für eine Stator-/Gehäuseanordnung mit mehreren über den Umfang verteilten Verdrehsicherungen;
- Fig. 6: eine Schrägansicht eines etwas detaillierter dargestellten Gehäuseteils;
- Fig. 7: eine Schrägansicht eines etwas detaillierter dargestellten Stators;
- Fig. 8-11: einen möglichen Ablauf bei der Herstellung der Stator-/Gehäuseanordnung für die elektrische Maschine;
- Fig. 12-15: mögliche Ausrichtungen von Gehäusenut und Statornut und
- Fig. 16: ein Fahrzeug mit einer elektrischen Maschine der offenbarten Art.

### DETAILIERTE BESCHREIBUNG DER ERFINDUNG

Einführend wird festgehalten, dass gleiche Teile in den unterschiedlich Ausführungsformen mit gleichen Bezugszeichen beziehungsweise gleichen Bauteilbezeichnungen versehen werden, gegebenenfalls mit unterschiedlichen Indizes. Die in der Beschreibung enthaltene Offenbarungen eines Bauteils kann sinngemäß ein anderes Bauteil mit gleichem Bezugszeichen beziehungsweise gleicher Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

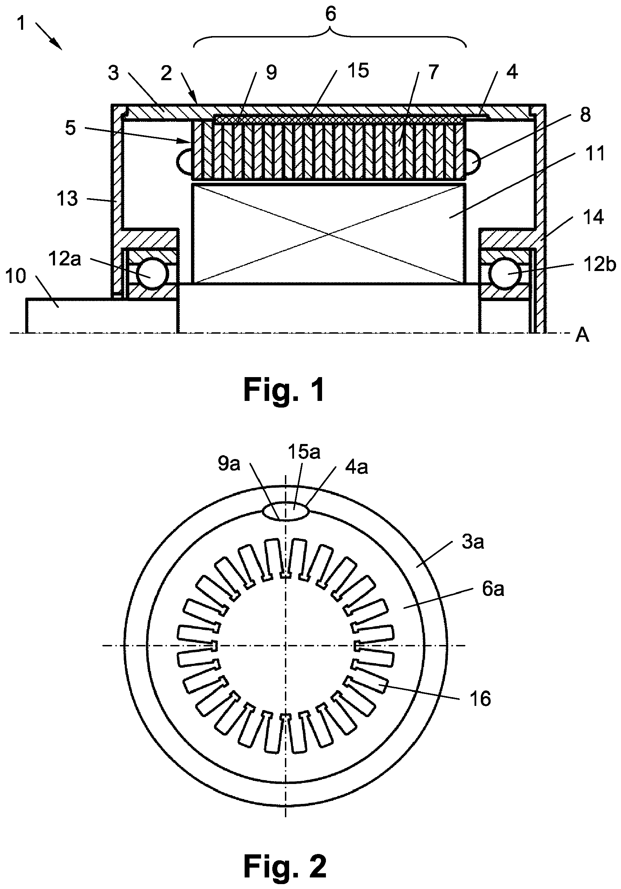

Fig. 1 zeigt einen Halbschnitt durch eine schematisch dargestellte elektrische Maschine 1. Die elektrische Maschine 1 umfasst in diesem Beispiel ein Gehäuse 2 mit einem Gehäuseteil 3, das zumindest eine umfangsseitige, radial nach innen offene Gehäusenut 4 aufweist, sowie einen in dem Gehäuseteil 3 angeordneten Stator 5 mit einem Statorblechpaket 6, das mehrere hintereinander angeordnete Statorbleche 7 aufweist und in dem Statorwicklungen 8 aufgenommen sind. Das Statorblechpaket 6 umfasst zudem zumindest eine umfangsseitige, radial nach außen offene Statornut 9. Die elektrische Maschine 1 umfasst darüber hinaus eine Welle 10 mit einem darauf sitzenden, hier nicht im Detail dargestellten Rotor 11, wobei die Welle 10 mit Hilfe von (Wälz)lagern 12a, 12b um eine Drehachse A gegenüber dem Stator 4 drehbar gelagert ist. Konkret sitzt das erste Lager 12a in einem vorderen Lagerschild 13 und das zweite Lager 12b in einem hinteren Lagerschild 14. Das (mittlere) Gehäuseteil 3 verbindet das vordere Lagerschild 13 und das hintere Lagerschild 14. Das vordere Lagerschild 13, das hintere Lagerschild 14 und das Gehäuseteil 3 bilden in diesem Beispiel das Gehäuse 2 der elektrische Maschine 1.

Das Statorblechpaket 5 ist in einer solchen Position im Gehäuseteil 3 angeordnet, in der die Gehäusenut 4 und die Statornut 9 einen Schnittbereich beziehungsweise einen Überlappungsbereich aufweisen. Das heißt, das Volumen der Gehäusenut 4 und das Volumen der Statornut 9 sind miteinander verbunden. In den durch die Gehäusenut 4 und die Statornut 9 gebildeten Hohlraum ist eine Vergußmasse 15 eingebracht, welche in dem genannten Schnittbereich zusammenhängt.

Fig. 2 zeigt nun ein erstes Beispiel für eine Stator-/Gehäuseanordnung, welche ein Gehäuseteil 3a und ein Statorblechpaket 6a der oben genannten Art aufweist, in Vorderansicht. In der Fig. 2 sind die Statorwicklungen 8 nicht dargestellt, weswegen die Statorwicklungsnuten 16 zu sehen sind. Konkret weist die in Fig. 2 dargestellte Stator-/Gehäuseanordnung eine Verdrehsicherung mit ellipsenförmigem Querschnitt auf, welche durch die Vergußmasse 15a gebildet ist, sowie eine dementsprechend geformte Gehäusenut 4a und eine dementsprechend geformte Statornut 9a.

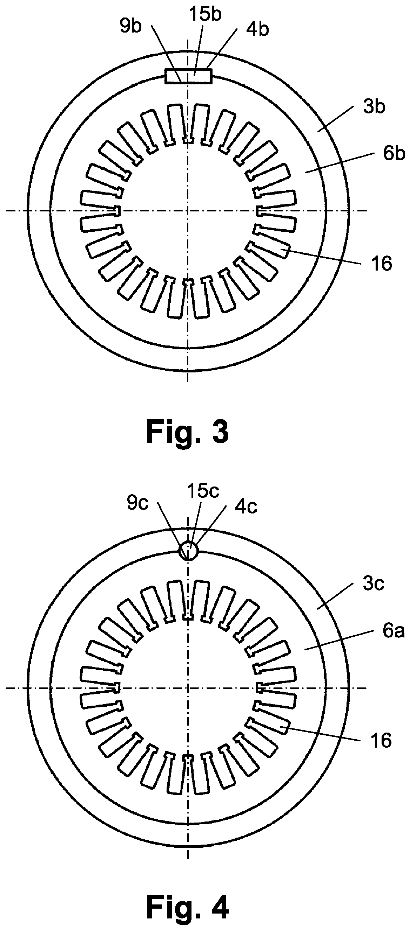

Fig. 3 zeigt eine Stator-/Gehäuseanordnung, welche der in Fig. 2 dargestellten Stator-/Gehäuseanordnung sehr ähnlich ist. Im Unterschied dazu weist die durch die Vergußmasse 15b gebildete Verdrehsicherung einen rechteckförmigen Querschnitt auf.

Fig. 4 zeigt eine Stator-/Gehäuseanordnung, welche der in Fig. 2 dargestellten Stator-/Gehäuseanordnung ebenfalls sehr ähnlich ist. Im Unterschied dazu weist die durch die Vergußmasse 15c gebildete Verdrehsicherung einen kreisförmigen Querschnitt auf.

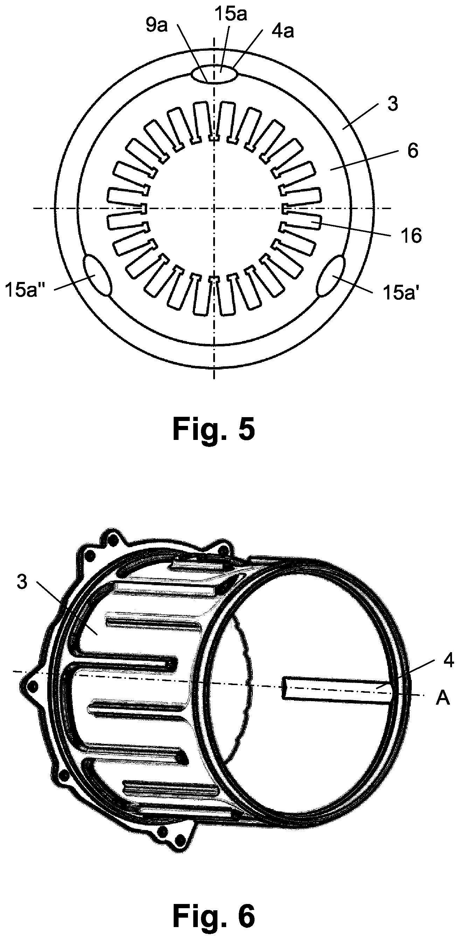

Fig. 5 zeigt schließlich noch eine weitere Stator-/Gehäuseanordnung, welche der in Fig. 2 dargestellten Stator-/Gehäuseanordnung sehr ähnlich ist. Im Unterschied dazu, sind aber drei Verdrehsicherungen mit ellipsenförmigen Querschnitt, welche durch die Vergußmassen 15a..15a" gebildet sind, über den Umfang der Stator-/Gehäuseanordnung verteilt angeordnet. Konkret sind diese um jeweils 120° zueinander verdreht.

Selbstverständlich ist der ellipsenförmigen Querschnitt für die in der Fig. 5 dargestellte Stator-/Gehäuseanordnung rein beispielhaft zu sehen, und es sind auch andere Querschnittsformen möglich. Und natürlich sind auch bei einzelnen Verdrehsicherungen, so wie sie in den Fig. 2 bis 4 dargestellt sind, andere Querschnittsformen möglich als ellipsenförmige, kreisförmige oder rechteckige Querschnitte.

Fig. 6 zeigt nun eine etwas detailliertere Schrägansicht eines Gehäuseteils 3 mit der darin angeordneten Gehäusenut 4.

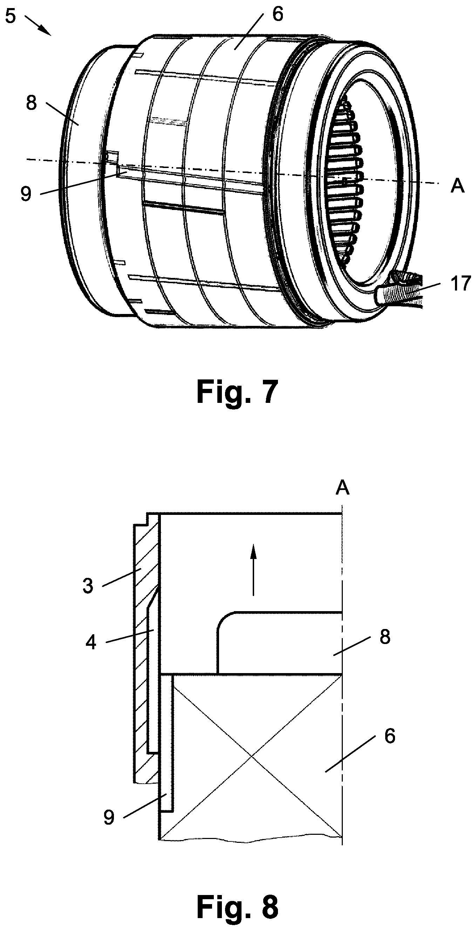

Fig. 7 zeigt weiterhin eine etwas detailliertere Schrägansicht eines Stators 5 mit der darauf angeordneten Statornut 9. In der Fig. 5 sind darüber hinaus Anschlusskabel 17 für die Statorwicklung 8 dargestellt. Ein Abschluss der Statornut 9 ist in diesem Beispiel durch Verdrehung der Statorbleche 7 im Endbereich der Statornut 9 gegenüber den Statorblechen 7 im Nutbereich der Statornut 9 hergestellt. Dadurch kann die Statornut 9 auf einem Ende des Statorblechpakets 6 auf einfache Weise verschlossen werden. Die Statorbleche 7 können dabei identisch geformt sein und sind dann rationell herstellbar. Der Verdrehwinkel der Statorbleche 7 im Endbereich der Statornut 9 gegenüber den Statorblechen 7 im Nutbereich der Statornut 9 liegt insbesondere im Bereich eines ganzzahligen Vielfachen des Winkels zwischen zwei benachbarten Statorwicklungsnuten 16. Wenn die Statornut 9 wie hier in diesem Beispiel schräg beziehungsweise schraubenlinienförmig verläuft, weicht der Verdrehwinkel der Statorbleche 7 im Endbereich der Statornut 9 gegenüber den Statorblechen 7 im Nutbereich der Statornut 9 von dem oben genannten Winkel jedoch etwas ab.

Die Fig. 8 bis 11 zeigen in Folge einen beispielhaften Ablauf bei der Herstellung einer Stator-/Gehäuseanordnung. In den Fig. 8. bis 11, welche jeweils einen Halbschnitt eines Details der Stator-/Gehäuseanordnung zeigen, ist die Stator-/Gehäuseanordnung gegenüber der Fig. 1 um 90° verdreht dargestellt und steht dort aufrecht. Das heißt die Rotationsachse A ist vertikal ausgerichtet.

In einem ersten, in Fig. 8 dargestellten Schritt wird das Statorblechpaket 6 in den Gehäuseteil 3 eingeschoben (siehe die mit dem Pfeil dargestellte Bewegungsrichtung des Statorblechpakets 6). Vorzugsweise wird zwischen dem Statorblechpaket 6 und dem Gehäuseteil 3 eine Presspassung vorgesehen. In dem in Fig. 8 dargestellten Fall ist die Statorwicklung 8 bereits in die Statornuten 16 des Statorblechpakets 6 gewickelt. Dies ist zwar vorteilhaft, jedoch kann die Statorwicklung 8 grundsätzlich auch zu einem späteren Zeitpunkt angebracht werden.

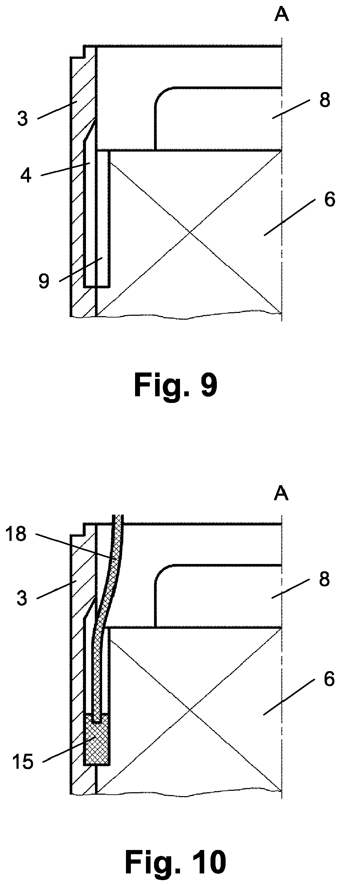

Fig. 9 zeigt einen Zustand, in dem das Statorblechpaket 6 die Endposition im Gehäuseteil 3 erreicht hat. Zur Festlegung der Position kann das Gehäuseteil 3 auch einen optionalen Anschlag für das Statorblechpaket 6 aufweisen.

In dem in Fig. 10 dargestellten Zustand wird die Vergußmasse 15 in die Statornut 9 und die Gehäusenut 4 eingebracht. In diesem Fall geschieht dies mit Hilfe einer rohrförmigen Lanze 18, die insbesondere flexibel ausgestaltet sein kann. Grundsätzlich kann die Vergußmasse 15 aber auch auf andere Weise in die Statornut 9 und die Gehäusenut 4 eingebracht werden, beispielsweise in dem das Innere der Stator-/Gehäuseanordnung mit der flüssigen Vergußmasse 15 geflutet wird, beispielsweise durch Eintauchen der Stator-/Gehäuseanordnung in einen Behälter, der mit der flüssigen Vergußmasse 15 befüllt ist.

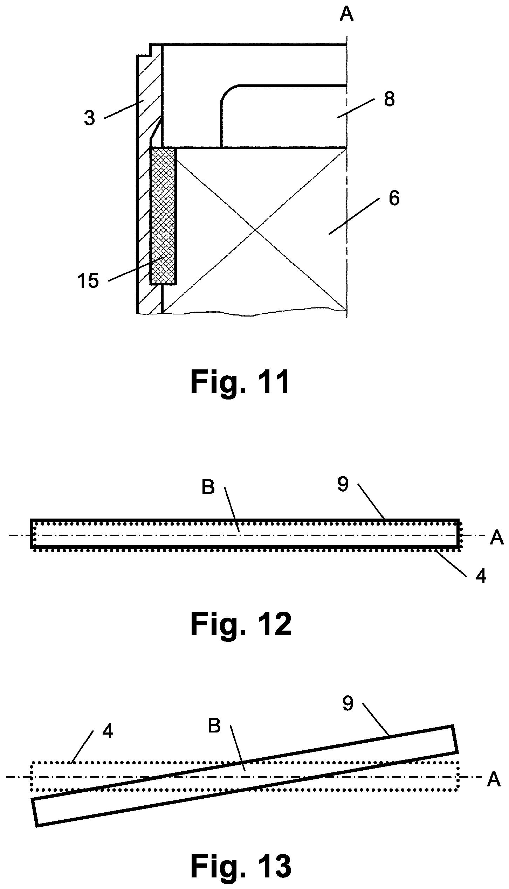

Fig. 11 zeigt schließlich einen Zustand, in dem die Statornut 9 und die Gehäusenut 4 vollständig mit der Vergußmasse 15 befüllt sind und die rohrförmige Lanze 18 wieder entfernt wurde. Im Anschluss wird die Vergußmasse 15 ausgehärtet.

Zusammenfassend umfasst das Verfahren zur Herstellung der Stator-/Gehäuseanordnung für die elektrische Maschine 1 die Schritte
- Bereitstellen eines Gehäuseteils 3 des Gehäuses 2, das zumindest eine umfangsseitige, radial nach innen offene Gehäusenut 4 aufweist,
- Bereitstellen eines Statorblechpakets 6 des Stators 5, das zumindest eine umfangsseitige, radial nach außen offene Statornut 9 aufweist,
- Einlegen oder Einpressen des Statorblechpakets 6 in das Gehäuseteil 3 in einer Position, in der die Gehäusenut 4 und die Statornut 9 einen Schnittbereich aufweisen und
- Einbringen einer Vergußmasse 15 in eine durch die Gehäusenut 4 und die Statornut 9 gebildeten Hohlraum, insbesondere mit Hilfe einer rohrförmigen Lanze 18.

Die Fig. 12 bis 15 zeigen nun in schematischer Darstellung verschiedene Ausrichtungen der Gehäusenut 4 und der Statornut 9 und die sich dabei ergebenden, unterschiedlichen Schnittbereiche B. Konkret sind die Gehäusenut 4, die Statornut 9 und der Schnittbereich B jeweils in Seitenansicht dargestellt. Alle übrigen Bauteile der elektrischen Maschine 1 sind in den Darstellungen der Fig. 12 bis 15 der besseren Übersicht halber weggelassen.

In der Fig. 12 sind die Gehäusenut 4 und der Statornut 9 parallel zur Rotationsachse A ausgerichtet. Es ergibt sich daher ein rechteckförmiger Schnittbereich B. Je nach Lage der Gehäusenut 4 und der Statornut 9 zueinander kann der rechteckförmige Schnittbereich B auch schmäler ausfallen, wenn die Gehäusenut 4 und die Statornut 9 nicht genau zueinander ausgerichtet sind.

In dem in Fig. 13 dargestellten Beispiel ist die Gehäusenut 4 parallel zur Rotationsachse A ausgerichtet, wohingegen die Statornut 9 schräg dazu ausgerichtet ist. Es ergibt sich demzufolge ein rautenförmiger Schnittbereich B. Je nach Lage der Gehäusenut 4 und der Statornut 9 zueinander kann die axiale Position des rautenförmigen Schnittbereichs B variieren, seine Größe bleibt aber über einen großen Bereich konstant.

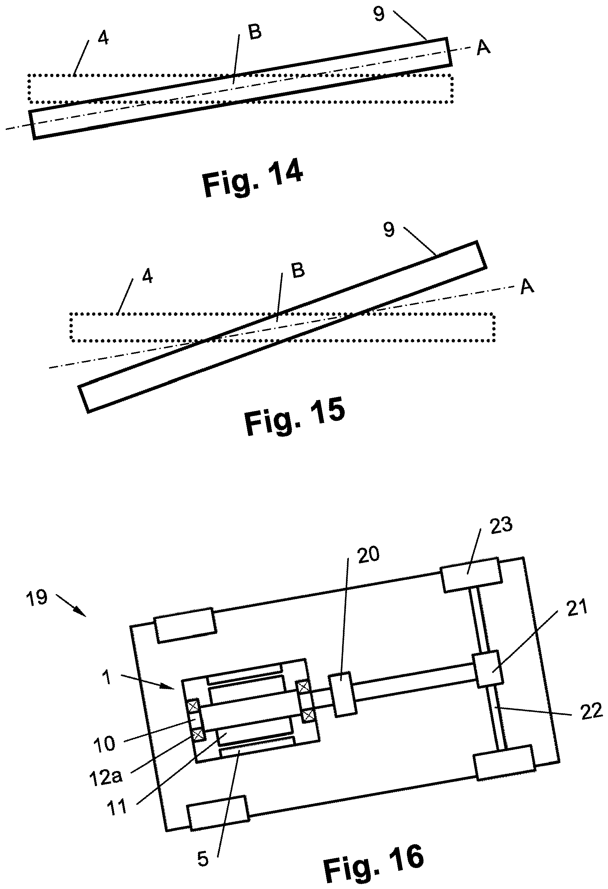

Fig. 14 zeigt ein Beispiel, das dem in Fig. 13 dargestellten Beispiel sehr ähnlich ist. Im Unterschied dazu sind jedoch die Rollen der Gehäusenut 4 und der Statornut 9 vertauscht. Die Wirkungsweise ist aber praktisch identisch.

Fig. 15 zeigt schließlich ein Beispiel, bei dem sowohl die Gehäusenut 4 als auch die Statornut 9 schräg zur Rotationsachse A ausgerichtet sind. Es ergibt sich wiederum ein rautenförmiger Schnittbereich B, dessen axiale Position je nach Lage der Gehäusenut 4 und der Statornut 9 zueinander variieren kann, dessen Größe aber über einen großen Bereich konstant bleibt.

An dieser Stelle wird angemerkt, dass die Gehäusenut 4 und die Statornut 9 auch in gleicher Richtung gegenüber der Rotationsachse A geneigt sein können. Ist der Verdrehwinkel gleich groß, dann ergeben sich ähnliche Verhältnisse wie in dem in Fig. 12 gezeigten Beispiel. Sind die Verdrehwinkel unterschiedlich groß, dann ergeben sich ähnliche Verhältnisse wie in der Fig. 15.

In den in den Fig. 1 und 6 bis 11 dargestellten Ausführungsformen ist die Statornut 9 auf einem Ende des Statorblechpakets 6 verschlossen, und es ist die Gehäusenut 4 auf einem Ende des Gehäuseteils 3 verschlossen. Auf diese Weise kann ein Ausfließen der Vergußmasse 15 beim Einbringen in die Gehäusenut 4 und die Statornut 9 verhindert werden, selbst bei hohen entstehenden Drücken. Auch wenn diese Ausführungsform Vorteile bietet, so ist es dennoch auch möglich, dass die Statornut 9 auf beiden Enden des Statorblechpakets 6 offen ist und/oder dass die Gehäusenut 4 auf beiden Enden des Gehäuseteils 3 offen ist.

In dem in Fig. 6 dargestellten Ausführungsbeispiel verläuft die Gehäusenut 4 in axialer Richtung. Auf diese Weise kann die Gehäusenut 4 problemlos beim Gießen des Gehäuseteils 3 hergestellt werden. Eine spanende Bearbeitung des Gehäuseteils 3 zur Herstellung der Gehäusenut 4 kann daher entfallen. Auch wenn diese Ausführungsform Vorteile bietet, so ist es dennoch auch möglich, dass die Gehäusenut 4 schräg beziehungsweise entlang einer Schraubenlinie verläuft.

Vorteilhaft umfassen die Statorbleche 7 jeweils eine umfangsseitige, radial nach außen offene Ausnehmung, die gemeinsam die Statornut 9 bilden. Die Statornut 9 kann dabei in axialer Richtung verlaufen, wenn die Statorbleche 7 bei der Herstellung des Statorblechpakets 6 deckungsgleich aufeinander gestapelt werden (Fall a), oder entlang einer Schraubenlinie verlaufen, wenn die Statorbleche 7 bei der Herstellung des Statorblechpakets 6 gegeneinander verdreht werden (Fall b).

Die Ausnehmungen in den Statorblechen 7 können beispielsweise durch Stanzen oder Laserschneiden hergestellt werden. Eine spanende Bearbeitung des Statorblechpakets 6 zur Herstellung der Statornut 9 kann daher entfallen. Ausgeschlossen ist diese aber nicht. Die Statornut 9 kann prinzipiell auch nach dem Stapeln der Statorbleche 7 hergestellt werden, beispielsweise durch Fräsen. Insbesondere können alle Statorbleche 7 identisch geformt sein.

Besonders vorteilhaft ist es weiterhin, wenn die Gehäusenut 4 in axialer Richtung und die Statornut 9 entlang einer Schraubenlinie verläuft (siehe auch Fig. 13). Die Herstellung der Gehäusenut 4 und der Statornut 9 kann daher - wie bereits oben beschrieben - auf einfache Weise erfolgen. Darüber hinaus ergibt sich ein Schnittbereich B, dessen Größe in weiten Bereichen unabhängig von einer Verdrehung zwischen dem Gehäuseteils 3 und dem Statorblechpaket 6 ist. Die Verdrehsicherung weist daher über einen weiten Bereich reproduzierbare Eigenschaften bei besonders einfacher Herstellung der elektrischen Maschine 1 auf.

Vorteilhaft besteht die Vergußmasse 15 aus einem Kunststoff oder einem Kunststoff-Verbundwerkstoff. Die Eigenschaften von Kunststoffen oder Kunststoff-Verbundwerkstoffen können über einen weiten Parameterbereich eingestellt und somit gut an die vorliegende Aufgabe angepasst werden. Eine gut angepasste Vergußmasse 15 kann daher einerseits gut in die Gehäusenut 4 und in die Statornut 9 eingebracht werden, erfüllt im ausgehärteten Zustand aber auch die Anforderungen an Stabilität, insbesondere bei starken Temperaturschwankungen und mechanischer Wechselbelastung.

Mit Hilfe der vorgeschlagenen Maßnahmen kann eine Verdrehsicherung zwischen dem Statorblechpaket 6 und dem Gehäuseteil 3 hergestellt werden, ohne dass dazu allzu hohe Anforderungen an den Herstellungsprozess gestellt werden. Erzielt wird dies durch die Vergußmasse 15, die in flüssiger oder pastöser Form in die Statornut 9 und die Gehäusenut 4 eingebracht wird und dort in Folge aushärtet. Dadurch muss eine bestimmte Winkellage zwischen dem Statorblechpaket 6 und dem Gehäuseteil 3 bei der Herstellung der elektrischen Maschine 1 nicht besonders genau eingehalten werden, da die Vergußmasse 15 in flüssiger oder pastöser Form auch bei nicht genauer Winkellage zwischen dem Statorblechpaket 6 und dem Gehäuseteil 3 gut eingebracht werden kann und sich an den durch die Statornut 9 und die Gehäusenut 4 gegebenen Hohlraum gut anpassen kann. Andererseits muss auch eine Passung zwischen dem Statorblechpaket 6 und dem Gehäuseteil 3 nicht besonders eng gewählt werden, um eine Verdrehung zwischen denselben zu verhindern, da die Vergußmasse 15 in ausgehärteter Form einen Formschluss zwischen dem Statorblechpaket 6 und dem Gehäuseteil 3 bewirkt und eine Verdrehung zwischen denselben wirksam verhindert, auch wenn eine Presspassung zwischen dem Statorblechpaket 6 und dem Gehäuseteil 3 lose werden sollte. Das Gehäuseteil 3 kann dadurch relativ dünnwandig gestaltet werden, was sich positiv auf das Gewicht der elektrischen Maschine 1 auswirkt und insbesondere den Einsatz derselben in einem Fahrzeug begünstigt.

Die Fig. 16 zeigt schließlich die in ein Fahrzeug 19 eingebaute elektrische Maschine 1. Das Fahrzeug 19 weist wenigstens zwei Achsen auf, von denen wenigstens eine angetrieben ist. Konkret ist der Elektromotor 1 mit einem optionalen Getriebe 20 und einem Differentialgetriebe 21 verbunden. An das Differentialgetriebe 21 schließen die Halbachsen 22 der Hinterachse an. An den Halbachsen 22 sind schließlich die angetriebenen Räder 23 montiert. Der Antrieb des Fahrzeugs 19 erfolgt zumindest teilweise oder zeitweise durch die elektrische Maschine 1. Das heißt, die elektrische Maschine 1 kann zum alleinigen Antrieb des Fahrzeugs 19 dienen oder zum Beispiel im Verbund mit einer Verbrennungskraftmaschine vorgesehen sein (Hybridantrieb).

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

## Patentansprüche

1. Verfahren zur Herstellung einer Stator-/Gehäuseanordnung für eine elektrische Maschine (1) mit einem Stator (5) und einem Gehäuse (2), aufweisend folgende Verfahrensschritte:
- Bereitstellen eines Gehäuseteils (3, 3a..3c) des Gehäuses (2), das zumindest eine umfangsseitige, radial nach innen offene Gehäusenut (4, 4a..4c) aufweist,
- Bereitstellen eines Statorblechpakets (6, 6a..6c) des Stators (5), das zumindest eine umfangsseitige, radial nach außen offene Statornut (9, 9a..9c) aufweist,
- Einlegen oder Einpressen des Statorblechpakets (6, 6a..6c) in das Gehäuseteil (3, 3a..3c) in einer Position, in der die Gehäusenut (4, 4a..4c) und die Statornut (9, 9a..9c) einen Schnittbereich (B) aufweisen und
- Einbringen einer Vergußmasse (15) in einen durch die Gehäusenut (4, 4a..4c) und die Statornut (9, 9a..9c) gebildeten Hohlraum, insbesondere mit Hilfe einer rohrförmigen Lanze (18).

2. Elektrische Maschine (1), umfassend
- ein Gehäuse (2) mit einem Gehäuseteil (3, 3a..3c), das zumindest eine umfangsseitige, radial nach innen offene Gehäusenut (4, 4a..4c) aufweist,
- einen in dem Gehäuseteil (3, 3a..3c) angeordneten Stator (5) mit einem Statorblechpaket (6, 6a..6c), wobei das Statorblechpaket (6, 6a..6c) zumindest eine umfangsseitige, radial nach außen offene Statornut (9, 9a..9c) aufweist und
- einen im Gehäuse (2) angeordneten und darin drehbar gelagerten Rotor (11),
**dadurch gekennzeichnet, dass**
- das Statorblechpaket (6, 6a..6c) in einer Position im Gehäuseteil (3, 3a..3c) angeordnet ist, in der die Gehäusenut (4, 4a..4c) und die Statornut (9, 9a..9c) einen Schnittbereich (B) aufweisen und
- dass eine im genannte Schnittbereich (B) zusammenhängende Vergußmasse (15) in einen durch die Gehäusenut (4, 4a..4c) und die Statornut (9, 9a..9c) gebildeten Hohlraum eingebracht ist, wobei
- das Statorblechpaket (6, 6a..6c) und der Gehäuseteil (3, 3a..3c) insbesondere Teil einer nach dem Verfahren nach Anspruch 1 hergestellten Stator-/Gehäuseanordnung sind.

3. Elektrische Maschine (1) nach Anspruch 2, **dadurch gekennzeichnet, dass** die Statornut (9, 9a..9c) auf einem Ende des Statorblechpakets (6, 6a..6c) verschlossen ist und/oder dass die Gehäusenut (4, 4a..4c) auf einem Ende des Gehäuseteils (3, 3a..3c) verschlossen ist.

4. Elektrische Maschine (1) nach Anspruch 2 oder 3, **dadurch gekennzeichnet, dass** das Statorblechpaket (6, 6a..6c) mehrere aufeinander gestapelte Statorbleche (7) umfasst, die jeweils eine umfangsseitige, radial nach außen offene Ausnehmung aufweisen, die gemeinsam die Statornut (9, 9a..9c) bilden, wobei die Statornut (9, 9a..9c)
a) in axialer Richtung verläuft oder
b) schraubenlinienförmig verläuft.

5. Elektrische Maschine (1) nach einem der Ansprüche 2 bis 4, **dadurch gekennzeichnet, dass** die Statorbleche (7) identisch geformt sind, wobei der Abschluss der Statornut (9, 9a..9c) durch Verdrehung der Statorbleche (7) im Endbereich der Statornut (9, 9a..9c) gegenüber den Statorblechen (7) im Nutbereich der Statornut (9, 9a..9c) bewerkstelligt ist.

6. Elektrische Maschine (1) nach einem der Ansprüche 2 bis 5, **dadurch gekennzeichnet, dass** die Gehäusenut (4, 4a..4c) in axialer Richtung verläuft.

7. Elektrische Maschine (1) nach einem der Ansprüche 2 bis 6, **dadurch gekennzeichnet, dass** die Vergußmasse (15) aus einem Kunststoff oder einem Kunststoff-Verbundwerkstoff besteht.

8. Elektrische Maschine (1) nach einem der Ansprüche 2 bis 7, **dadurch gekennzeichnet, dass** zwischen dem Statorblechpaket (6, 6a..6c) und dem Gehäuseteil (3, 3a..3c) eine Presspassung vorgesehen ist.

9. Fahrzeug (19) mit wenigstens zwei Achsen, von denen wenigstens eine angetrieben ist, **dadurch gekennzeichnet dass** der besagte Antrieb zumindest teilweise oder zeitweise durch die elektrische Maschine (1) nach einem der Ansprüche 2 bis 8 erfolgt.
